# FASCICULE DE BREVET EUROPEEN

(11) **EP 3 216 021 B1**
(45) Date de publication et mention de la délivrance du brevet: **17.06.2020**
(21) Numéro de dépôt: 15790906.0
(22) Date de dépôt: 02.11.2015
(51) Int. Cl.: G08G 5/06, G05D 1/00, G08G 5/04, G05D 1/02, G08G 5/00

(54) **PROCÉDÉ ET DISPOSITIF DE GUIDAGE D'UN AÉRONEF**
VERFAHREN UND VORRICHTUNG ZUM LENKEN EINES FLUGZEUGS
METHOD AND DEVICE FOR GUIDING AN AIRCRAFT

(30) Priorité: 03.11.2014 FR 1460566
(43) Date de publication de la demande: 13.09.2017
(73) Titulaire: Safran Electronics & Defense, 92100 Boulogne-Billancourt (FR)
(72) Inventeur: POUILLARD, Sylvain, F-92100 Boulogne-Billancourt (FR); BARA, Cédric, F-92100 Boulogne-Billancourt (FR)
(74) Mandataire: Regimbeau
(86) Numéro de dépôt international: PCT/EP2015/075481
(87) Numéro de publication internationale: WO 2016/071291

(56) Documents cités:
- EP-A1- 2 355 071
- EP-A2- 1 927 965
- EP-A2- 2 355 070
- EP-A2- 2 465 773
- FR-A1- 2 917 223
- FR-A1- 2 929 019
- US-A1- 2009 150 068
- US-A1- 2014 297 168

## Description

### DOMAINE TECHNIQUE GENERAL

L'invention concerne le domaine du guidage d'aéronef.

Elle a plus particulièrement pour objet un procédé de guidage d'un aéronef lors des phases de roulage au sol.

### ETAT DE LA TECHNIQUE

Lors des phases de roulage au sol, un aéronef doit être guidé sur l'aéroport en fonction des indications de la tour de contrôle, par exemple de sorte à atteindre une piste de décollage ou un hangar de maintenance. Afin que les phases de roulage ne présentent aucun danger, il est nécessaire d'éviter tout risque de sortie de piste ou de collision avec un autre appareil ou tout autre obstacle pouvant se situer sur les pistes.

Lorsqu'un tel guidage est réalisé manuellement par le pilote de l'aéronef, il peut être difficile pour celui-ci d'assurer simultanément le guidage de l'aéronef vers un emplacement à atteindre en fonction des instructions de la tour de contrôle et de la cartographie de l'aéroport, la surveillance de la position des autres appareils et véhicules sur les pistes pour éviter tout risque de collision, et le positionnement de l'aéronef par rapport à la piste pour éviter toute sortie de piste ou toute fausse manœuvre à proximité d'une porte d'embarquement (« gating »). Ceci est rendu d'autant plus difficile que le pilote dispose en général de moyens de contrôle visuel limités du positionnement de l'aéronef, particulièrement lors de virages ou lors des phases de « gating ».

Ceci est particulièrement vrai dans le cas du pilotage à distance de drones télécommandés. Le pilote d'un tel drone ne perçoit en effet l'environnement du drone que par le biais de caméras couvrant un champ de vision limité. La qualité et la résolution des images transmises peuvent en outre être limitées pour les rendre compatibles avec les exigences d'une retransmission en direct et sans fil. Le pilote d'un drone n'a par ailleurs aucune perception des accélérations de son aéronef, contrairement au pilote d'un avion placé dans la cabine de pilotage.

De plus, la distance entre le drone et son pilote impose une latence sensible dans les échanges de données. Une telle latence allonge considérablement le temps de réaction du pilote et peut rendre celui-ci incapable de suivre précisément une trajectoire souhaitée.

Certains systèmes proposent de décharger le pilote de la tâche de guidage de l'aéronef et de réaliser un guidage autonome de l'aéronef en fonction des consignes de la tour de contrôle et du positionnement absolu de l'aéronef par rapport à la cartographie de l'aéroport. De tels systèmes nécessitent une cartographie et un système de positionnement absolu extrêmement précis afin de pouvoir guider avec la précision requise l'aéronef sur les pistes de l'aéroport. Ces systèmes calculent une route à suivre pour l'aéronef en fonction de la cartographie de l'aéroport, de la position de l'aéronef et des consignes du contrôle au sol.

Ces systèmes sont néanmoins incapables d'adapter sans délai la trajectoire suivie par l'aéronef en cas de changement de la consigne du contrôle au sol. Celui-ci est en effet susceptible de modifier les ordres de roulage transmis, par exemple afin d'éviter une collision avec un autre appareil ou d'envoyer l'aéronef vers un nouveau point de parking. Le système de guidage de l'aéronef doit alors permettre une application immédiate des nouvelles consignes du contrôle au sol. Or les systèmes de guidage autonomes nécessitent dans ce cas le calcul d'une nouvelle route pour l'aéronef et imposent un délai avant la prise en compte de ces nouvelles consignes.

La demande de brevet FR 2 929 019 décrit un procédé et un dispositif de pilotage latéral d'un aéronef roulant au sol.

La demande de brevet EP 2 355 070 A2 décrit un procédé et un dispositif fournissant des informations relatives au roulage d'un aéronef dans un aéroport comprenant plusieurs voies de roulage.

La demande de brevet EP 2 355 071 A1 décrit un procédé et un dispositif destiné à l'affichage de signalisation concernant les voies de roulage d'un aéroport.

Il existe donc un besoin d'un procédé de guidage allégeant la charge du pilote pendant les phases de roulage et réalisant un guidage précis de l'aéronef tout en permettant la prise en compte à tout instant sans délai de nouvelles consignes de roulage.

### PRESENTATION DE L'INVENTION

La présente invention se rapporte selon un premier aspect à un procédé de guidage d'un aéronef sur une zone de roulage d'un aéroport mis en œuvre par un dispositif de traitement de données d'un système de guidage selon la revendication 1.

Un tel procédé permet de réaliser un guidage précis de l'aéronef en ne requérant du pilote qu'un choix de trajectoire, révisable à tout moment. De plus le pilote peut ainsi imposer un rayon de courbure de son choix pour imposer un guidage automatique de l'aéronef le long de la trajectoire correspondante.

Lorsque l'aéronef est dans une zone d'évolution linéaire de la zone de roulage dans laquelle l'aéronef suit une trajectoire parmi un ensemble de trajectoires prédéfinies, lesdites trajectoires futures possibles peuvent être déterminées parmi l'ensemble de trajectoires prédéfinies, ladite commande reçue peut être une commande d'une direction à suivre par l'aéronef à une intersection à venir et la trajectoire à suivre sélectionnée à ladite intersection peut être la trajectoire future possible orientée selon ladite direction à suivre.

Ainsi le pilote peut spécifier à l'avance la direction que le guidage doit faire prendre à l'aéronef à la prochaine intersection.

Dans un premier mode de mise en œuvre, lesdites trajectoires prédéfinies peuvent être stockées sous forme d'une cartographie de la zone de roulage géoréférencée et lesdites trajectoires futures possibles peuvent être déterminées en fonction d'une position absolue de l'aéronef et de ladite cartographie.

Un tel premier mode de mise en œuvre permet de guider l'aéronef de manière très précise, sans dépendre de la perception par les systèmes de l'aéronef de son environnement.

Dans un deuxième mode de mise en œuvre, ledit dispositif de traitement de données étant susceptible d'être relié à au moins un dispositif de détection d'indicateurs au sol, lesdites trajectoires prédéfinies sont définies par au moins un indicateur au sol, et lesdites trajectoires futures possibles sont déterminées à partir de données de mesure mesurées par ledit au moins un dispositif de détection.

Un tel deuxième mode de mise en œuvre permet de réaliser un guidage autonome de l'aéronef sans dépendre d'un système de positionnement externe.

Selon un premier mode de réalisation, l' étape de détection de zone détermine si l'aéronef est positionné dans une zone d'évolution linéaire ou une zone d'évolution libre de la zone de roulage en fonction d'une position absolue de l'aéronef et d'une cartographie de la zone de roulage géoréférencée.

Le dispositif de traitement peut ainsi déterminer le mode de guidage à appliquer en fonction de sa position sur l'aéroport.

Ledit dispositif de traitement de données étant susceptible d'être relié à au moins un dispositif de détection de marqueurs au sol, l' étape de détection de zone dans laquelle le dispositif de traitement de données détermine selon un deuxième mode de réalisation si l'aéronef est positionné dans une zone d'évolution linéaire ou une zone d'évolution libre de la zone de roulage à partir de données de mesure mesurées par lesdits dispositifs de détection de marqueurs au sol.

Ceci permet au dispositif de traitement de déterminer le mode de guidage à appliquer sans avoir besoin de connaitre sa position absolue.

L'aéronef étant positionné dans une zone d'évolution libre de la zone de roulage, l'étape de sélection de ladite trajectoire à suivre du procédé selon le premier aspect comprend la sélection d'une trajectoire future parmi les trajectoires futures possibles déterminées en fonction de ladite commande reçue, la détection d'une intersection entre ladite trajectoire future sélectionnée et une frontière entre ladite zone d'évolution libre et une zone d'évolution linéaire de la zone de roulage, et la détermination de la trajectoire à suivre en corrigeant la trajectoire future sélectionnée de sorte que la trajectoire à suivre intersecte ladite frontière à une extrémité d'une trajectoire prédéfinie de ladite zone d'évolution linéaire.

Ceci permet de s'assurer que l'aéronef sera bien placé par rapport à la trajectoire prédéterminée qu'il se mettra à suivre lors de son entrée dans une zone de guidage linéaire.

Ladite correction de la trajectoire future sélectionnée est réalisée en fonction d'un rayon de courbure minimal de la trajectoire de l'aéronef.

Ceci permet de ne pas imposer à l'aéronef une consigne de guidage impossible à suivre à cause d'un rayon de courbure impossible à satisfaire.

Le procédé selon le premier aspect peut comprendre en outre une étape d'affichage de la trajectoire à suivre sur une image de la topographie de la zone de roulage au voisinage de l'aéronef.

Un tel affichage permet au pilote de contrôler la trajectoire que l'aéronef va suivre et de corriger sa commande pour adapter cette trajectoire si celle-ci ne lui convient pas.

Au moins une desdites commandes peut être une commande d'un pilote de l'aéronef.

Au moins une desdites commandes peut être une commande manuelle ou vocale ou tactile.

Le pilote peut ainsi disposer de différents modes de saisie de ses commandes, sans nécessairement devoir avoir les mains libres.

Ladite étape de guidage du procédé selon le premier aspect peut comprendre une immobilisation de l'aéronef lorsqu'un risque de collision de l'aéronef avec un obstacle mobile ou immobile situé au voisinage de l'aéronef est détecté.

Ainsi le pilote peut être déchargé de la tâche de surveillance des obstacles se trouvant sur le chemin de l'aéronef tout en assurant la sécurité de celui-ci.

Selon un deuxième aspect, l'invention concerne un produit programme d'ordinateur comprenant des instructions de code pour l'exécution d'un procédé selon le premier aspect lorsque ce programme est exécuté par un processeur.

Selon un troisième aspect, l'invention concerne un dispositif de traitement de données d'un système de guidage d'un aéronef sur une zone de roulage d'un aéroport tel que défini par la revendication 12.

De tels produit programme d'ordinateur et dispositif de traitement de données présentent les mêmes avantages que ceux évoqués pour le procédé selon le premier aspect.

### PRESENTATION DES FIGURES

D'autres caractéristiques et avantages apparaîtront à la lecture de la description qui va suivre d'un mode de réalisation. Cette description sera donnée en référence aux dessins annexés dans lesquels :
- la figure 1 illustre schématiquement un exemple d'architecture pour la mise en œuvre d'un procédé de guidage selon l'invention ;
- la figure 2 est un diagramme schématisant un exemple de mise en œuvre d'un procédé de guidage d'un aéronef selon l'invention ;
- la figure 3 illustre schématiquement une zone d'évolution libre et une zone d'évolution linéaire d'une zone de roulage d'un aéroport ;
- la figure 4 illustre un exemple de mise en œuvre d'un procédé de guidage selon l'invention dans une zone d'évolution linéaire ne comprenant qu'une seule trajectoire prédéfinie ;
- les figures 5a, 5b, 5c illustrent un exemple de mise en œuvre d'un procédé de guidage selon l'invention dans une zone d'évolution linéaire comprenant une intersection;
- la figure 6 illustre un exemple de mise en œuvre d'un procédé de guidage selon l'invention dans une zone d'évolution libre;
- les figures 7a et 7b illustrent des exemples d'affichage de la trajectoire à suivre ;
- la figure 8 illustre un exemple de mise en œuvre d'un procédé de guidage selon l'invention au passage d'une zone d'évolution libre à une zone d'évolution linéaire.

### DESCRIPTION DETAILLEE

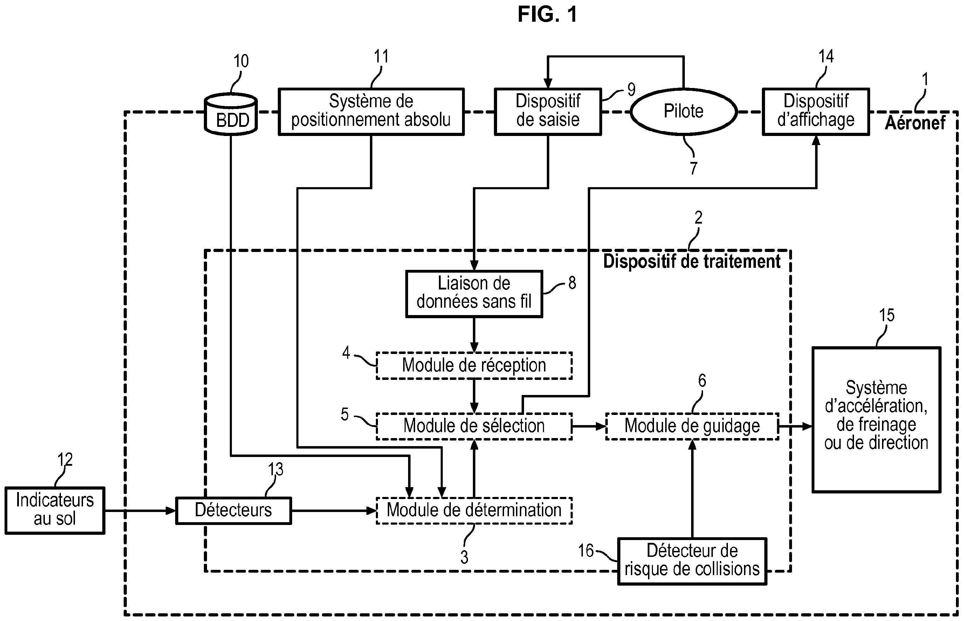

Un mode de mise en œuvre de l'invention concerne un procédé de guidage d'un aéronef 1 sur une zone de roulage d'un aéroport, mis en œuvre par un dispositif de traitement de données 2, représenté en **figure 1****.** Celui-ci réalise un guidage autonome de l'aéronef 1 le long d'une trajectoire choisie parmi plusieurs trajectoires possibles pour l'aéronef, par exemple par le pilote de l'aéronef. Contrairement aux procédés de guidage autonome existants, le pilote peut modifier son choix de trajectoire à tout moment et la trajectoire de l'aéronef peut être adaptée immédiatement.

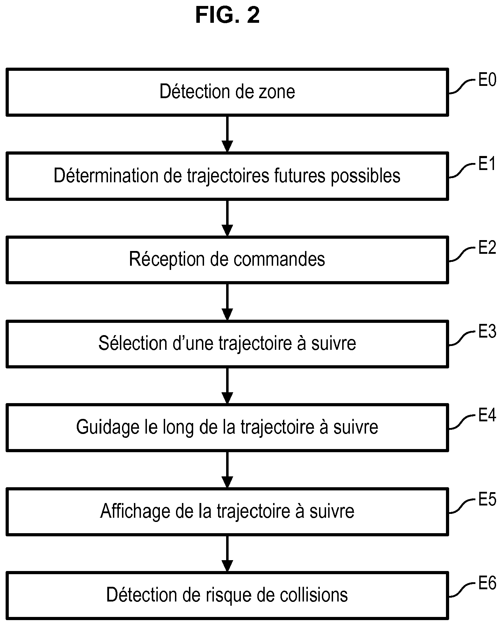

Pour cela, comme représenté en **figure 2****,** un module de détermination 3 du dispositif de traitement de données 2 peut déterminer lors d'une étape de détermination E1 au moins une trajectoire future possible de l'aéronef en fonction de la topographie de la zone de roulage au voisinage de l'aéronef. Un module de réception 4 du dispositif de traitement de données 2 peut ensuite recevoir lors d'une étape de réception E2 au moins une commande relative à la trajectoire à suivre par l'aéronef. Un module de sélection 5 du dispositif de traitement de données 2 peut ensuite sélectionner lors d'une étape de sélection E3 une trajectoire à suivre en fonction des trajectoires futures possibles déterminées et de la commande reçue. Enfin, un module de guidage 6 du dispositif de traitement de données 2 peut enfin procéder lors d'une étape de guidage E4 au guidage de l'aéronef le long de la trajectoire à suivre sélectionnée.

Au moins une des commandes reçues par le dispositif de traitement de données 2 du système de guidage relatif peut être une commande d'un pilote 7 de l'aéronef. Ce pilote peut se trouver à bord de l'appareil ou bien à distance, par exemple dans le cas du télépilotage d'un drone ou bien du pilotage à distance d'un aéronef par le contrôle au sol durant sa phase de roulage au sol. Le dispositif de traitement peut être relié à une liaison de données sans fil 8 par laquelle des commandes distantes peuvent être reçues. Le dispositif de traitement de données peut ainsi recevoir une commande transmise par la tour de contrôle afin de lui indiquer un changement de direction ou un freinage pour éviter une collision. Le dispositif de traitement peut être relié à un dispositif de saisie 9 permettant au pilote de saisir ses commandes. Ce dispositif de saisie peut comprendre un écran tactile pour la saisie de commandes tactiles ou bien un levier de commande tel qu'un mini-manche pour la saisie de commandes manuelles. Ce dispositif de saisie peut également comprendre un microphone et un dispositif de reconnaissance vocale pour la transmission de commandes vocales, afin d'authentifier le pilote et de reconnaitre la commande vocale transmise par celui-ci.

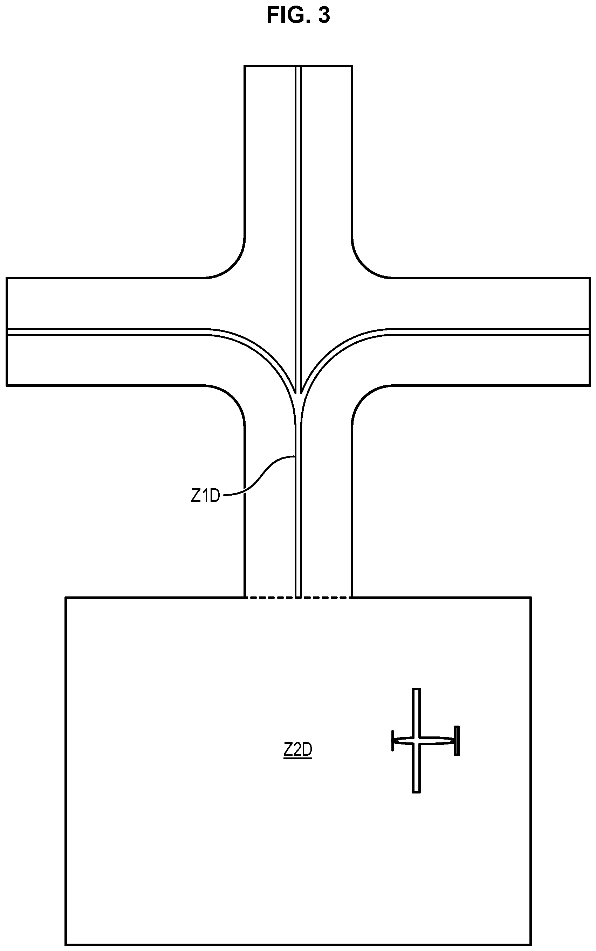

La zone de roulage de l'aéroport peut être subdivisée en deux types de zones, comme représenté en **figure 3** :
- des zones d'évolution libre (Z2D) dans lesquelles les aéronefs peuvent manœuvrer librement afin de rejoindre un point d'arrêt tel qu'une porte d'embarquement, un emplacement de parking, un hangar etc...
- des zones d'évolution linéaire (Z1D) dans lesquelles l'aéronef doit suivre une trajectoire parmi un ensemble de trajectoires prédéfinies. Ces zones correspondent par exemple aux pistes de décollage et d'atterrissage et aux voies de roulage (« taxiing ») (« taxiways ») empruntées par les aéronefs pour se déplacer entre les pistes de décollage et d'atterrissage et les zones d'évolution libre décrites ci-dessus. Dans de telles zones les aéronefs sont supposés suivre des trajectoires définies par les autorités aéroportuaires telles que la ligne centrale d'une telle voie de roulage. Ces zones peuvent présenter des intersections ou bifurcations au niveau desquelles plusieurs trajectoires menant dans des directions différentes sont autorisées pour un aéronef.

Les étapes de détermination d'au moins une trajectoire future possible E1, de réception d'au moins une commande relative à la trajectoire à suivre E2 et de sélection d'une trajectoire à suivre E3 peuvent être mises en œuvre différemment selon le type de zone de roulage dans laquelle se trouve l'aéronef.

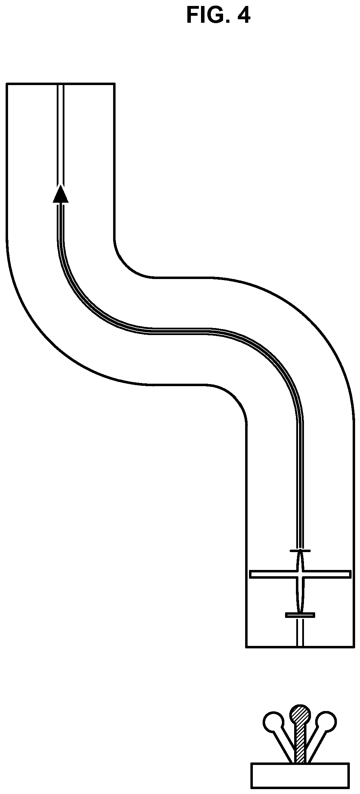

Lorsque l'aéronef est dans une zone d'évolution linéaire de la zone de roulage dans laquelle l'aéronef doit suivre une trajectoire parmi un ensemble de trajectoires prédéfinies, le module de détermination 3 du dispositif de traitement de données 2 peut déterminer les trajectoires futures possibles de l'aéronef parmi cet ensemble de trajectoires prédéfinies lors de l'étape de détermination d'au moins une trajectoire future possible E1. Pour cela, le module de détermination 3 analyse la portion de la zone de roulage située vers l'avant de l'aéronef que l'aéronef va rencontrer dans un avenir proche au cours de son déplacement le long de la trajectoire prédéfinie qu'il est en train de suivre. Si cette portion de la zone de roulage ne comporte qu'une seule trajectoire prédéfinie, celle-ci est déterminée comme la seule trajectoire future possible pour l'aéronef comme représenté en **figure 4****.** Si la portion de la zone de roulage analysée comporte une bifurcation, les différentes trajectoires prédéfinies en aval de cette bifurcation sont déterminées comme les trajectoires futures possibles de l'aéronef et le dispositif de traitement de données doit déterminer quelle trajectoire faire suivre à l'aéronef parmi les trajectoires futures possibles.

Lors de l'étape de réception d'au moins une commande relative à la trajectoire à suivre E2, le module de réception 4 peut alors recevoir du pilote une commande d'une direction à suivre par l'aéronef à l'intersection à venir. A titre d'exemple, le module de réception 4 peut recevoir une commande lui indiquant de tourner à droite à la prochaine intersection.

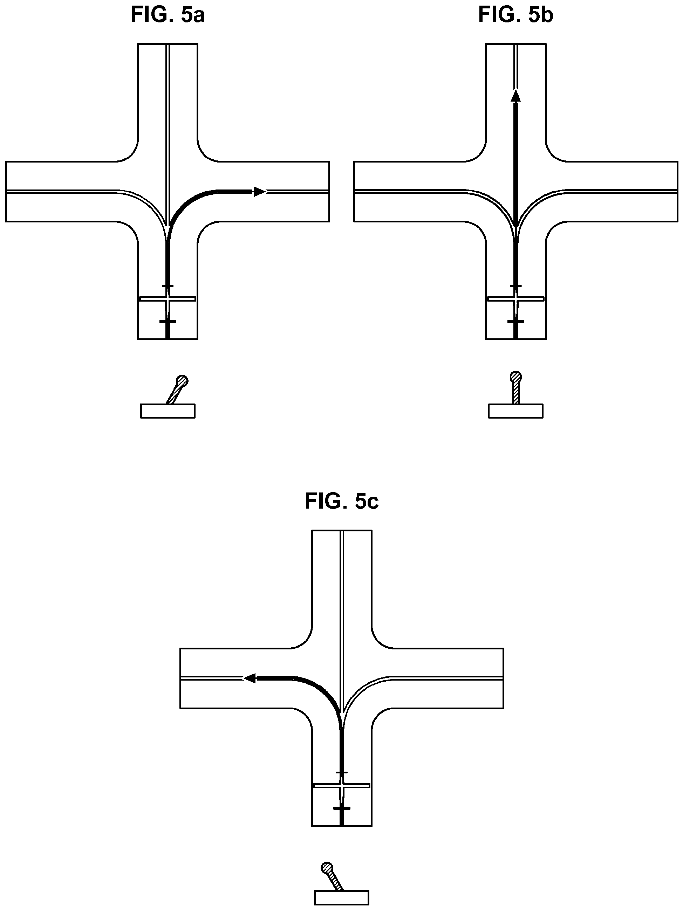

Lors de l'étape de sélection d'une trajectoire à suivre E3, le module de sélection 5 peut alors sélectionner comme trajectoire à suivre à cette intersection la trajectoire future possible orientée selon la direction à suivre spécifiée par la commande reçue, comme représenté en **figures 5a, 5b, 5c****.**

Une fois l'intersection atteinte, le module de guidage 6 guide alors l'aéronef le long de la trajectoire choisie, la trajectoire la plus à droite par exemple, parmi les trajectoires prédéfinies autorisées pour l'aéronef.

Avant chaque bifurcation, le dispositif de traitement peut ainsi déterminer les différentes trajectoires que l'aéronef serait susceptible d'emprunter et le pilote de l'aéronef peut spécifier à l'avance la trajectoire qu'il veut que le dispositif de traitement fasse suivre à l'aéronef lors de l'étape de guidage E4.

Selon un premier mode de mise en œuvre, les trajectoires prédéfinies sont stockées sous forme d'une cartographie de la zone de roulage géoréférencée. Une telle cartographie peut être stockée dans des moyens de stockage 10, tels qu'une base de données, reliés au dispositif de traitement. Le dispositif de traitement peut également être relié à système de positionnement absolu 11, embarqué tel qu'un GPS, ou bien externe, tel qu'un radar au sol. Lors de l'étape de détermination d'au moins une trajectoire future possible E1, les trajectoires futures possibles de l'aéronef peuvent alors être déterminées en fonction d'une position absolue de l'aéronef fournie par le système de positionnement absolu 11 et de ladite cartographie. Le module de détermination 3 peut par exemple repérer la position de l'aéronef sur la cartographie, déterminer la position de la prochaine bifurcation le long de la trajectoire prédéfinie actuellement suivie par l'aéronef et analyser les trajectoires prédéfinies indiquées sur la cartographie en aval de cette bifurcation pour déterminer les trajectoires futures possibles de l'aéronef.

Selon un deuxième mode de mise en œuvre, les trajectoires prédéfinies de la zone de roulage ne sont pas enregistrées sous forme d'une cartographie mais sont indiquées directement sur les zones de roulage par des indicateurs au sol 12 tels que des lignes peintes, des indicateurs lumineux, des réflecteurs... Le dispositif de traitement de données peut alors être relié à au moins un dispositif de détection 13 d'indicateurs au sol. Ces dispositifs de détection 13 peuvent inclure un capteur d'image et des moyens de traitement d'image permettant de reconnaitre la position des indicateurs au sol et d'en déduire la ou les trajectoires prédéfinies présentes dans l'image. Lors de l'étape de détermination d'au moins une trajectoire future possible E1, les trajectoires futures possibles de l'aéronef peuvent alors être déterminées par le module de détermination 3 à partir de données de mesure mesurées par ledit au moins un dispositif de détection 13.

Lorsque l'aéronef atteint une intersection sans avoir reçu de commande relative à la direction à faire prendre à l'aéronef pour cette intersection, le dispositif de traitement peut postuler une commande par défaut, par exemple aller tout droit. Alternativement, lorsque le dispositif de saisie 9 est un levier de commande, la position de celui-ci indique en permanence la commande de direction à suivre à la prochaine bifurcation.

Le pilote 7, connaissant la cartographie de l'aéroport et la destination de l'aéronef indiquée par la tour de contrôle, peut ainsi commander la direction à faire prendre à l'aéronef lors de la prochaine intersection rencontrée par celui-ci sur le chemin vers sa destination. Une fois la commande de direction saisie, le pilote n'a plus à se soucier du guidage de l'aéronef qui est alors entièrement pris en charge par le dispositif de traitement, au moins jusqu'à la bifurcation suivante ou jusqu'à la sortie de la zone d'évolution linéaire dans laquelle se trouve l'aéronef. Tant que l'aéronef n'a pas atteint la prochaine bifurcation, le pilote peut modifier sa commande de direction, par exemple afin de prendre en compte une nouvelle consigne du contrôle au sol.

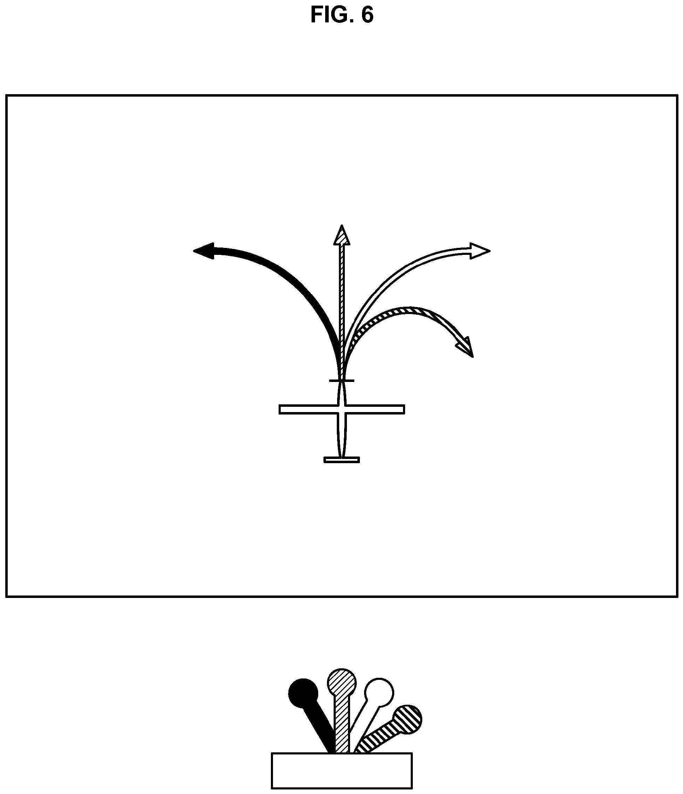

Lorsque l'aéronef est dans une zone d'évolution libre aucune trajectoire prédéfinie n'est imposée à l'aéronef. Lors de l'étape de détermination d'au moins une trajectoire future possible E1, les trajectoires futures possibles déterminées par le module de détermination 3 peuvent alors être des trajectoires correspondant à un ensemble de rayons de courbure prédéterminés pouvant être appliqués à l'aéronef par le pilote afin de le faire tourner. A chaque rayon de courbure possible correspond alors une trajectoire future possible pour l'aéronef sur la zone d'évolution libre à partir de sa localisation courante, comme représenté en **figure 6****.**

Lors de l'étape de réception d'au moins une commande relative à la trajectoire à suivre E2, le module de réception 4 peut alors recevoir du pilote une commande relative à un rayon de courbure de trajectoire à appliquer à l'aéronef. A titre d'exemple, dans le cas d'un levier de commande, chaque position possible du levier peut correspondre à un rayon de courbure différent et les trajectoires futures possibles déterminées lors de l'étape de détermination E1 peuvent correspondre à l'ensemble des positions possibles de ce levier.

Lors de l'étape de sélection d'une trajectoire à suivre E3, le module de sélection 5 peut alors sélectionner comme trajectoire à suivre la trajectoire future possible correspondant au rayon de courbure commandé. Le guidage de l'aéronef est ensuite réalisé de manière autonome par le module de guidage lors de l'étape de guidage E4 le long de cette trajectoire jusqu'à ce que le rayon de courbure commandé soit modifié, que l'aéronef sorte de la zone d'évolution libre ou soit stoppé.

Le procédé peut également comprendre une étape de détection E0 de zone, mise en œuvre par le module de détermination 3, dans laquelle le dispositif de traitement de données détermine si l'aéronef est positionné dans une zone d'évolution linéaire ou une zone d'évolution libre de la zone de roulage.

Selon un premier mode mise en œuvre, une telle détection est réalisée en fonction d'une position absolue de l'aéronef, fournie par un système de positionnement absolu 11 tel que décrit ci-dessus, et d'une cartographie de la zone de roulage géoréférencée, telle que celle stockée dans les moyens de stockage 10 décrits ci-dessus.

Selon un deuxième mode de mise en œuvre, le dispositif de traitement de données est relié à au moins un dispositif de détection 13 de marqueurs au sol tel que celui décrit ci-dessus et une telle détection est réalisée à partir de données de mesure mesurées par les dispositifs de détection 13 de marqueurs au sol. De tels marqueurs peuvent par exemple être placés sur la zone de roulage de manière continue ou régulière afin que le dispositif de traitement puisse en permanence déterminer le type de zone dans laquelle se trouve l'aéronef en fonction des marqueurs situés au voisinage immédiat de l'aéronef. Alternativement de tels marqueurs sont positionnés uniquement sur la zone de roulage au niveau de la frontière entre deux zones de types différents afin de prévenir le dispositif de traitement d'un changement de zone si l'aéronef franchit cette frontière.

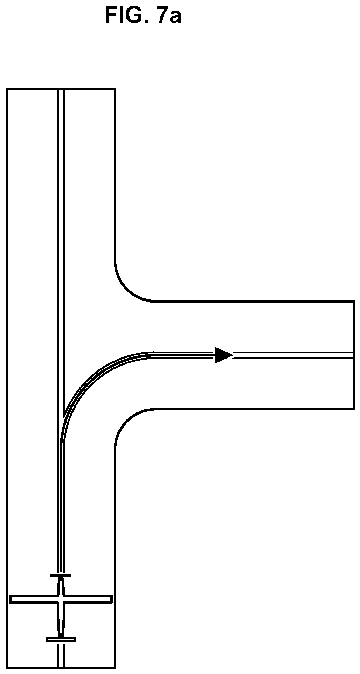

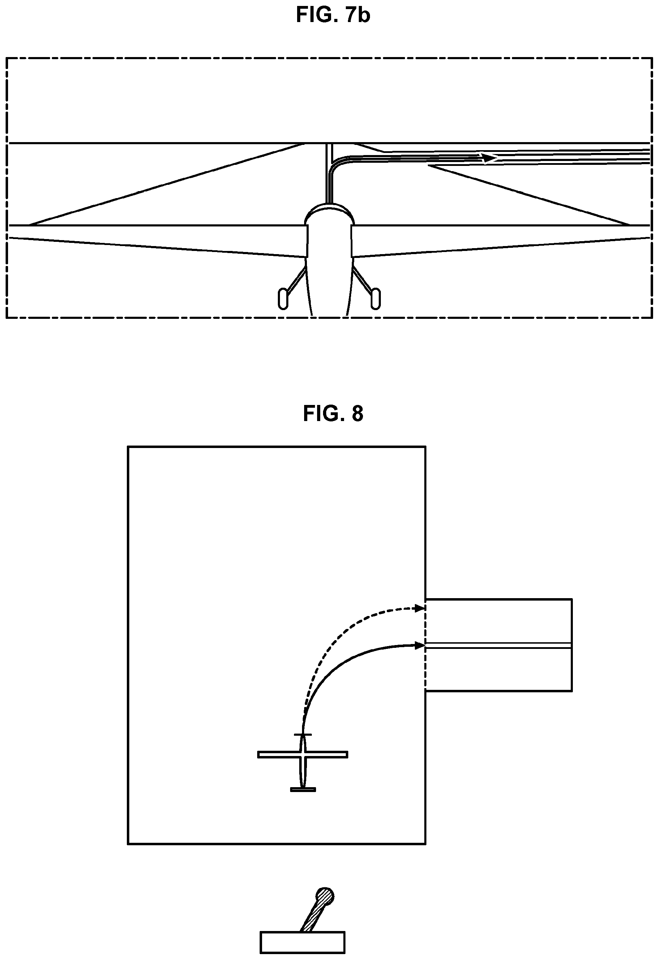

Le procédé peut comprendre une étape d'affichage E5 de la trajectoire à suivre sur une image de la topographie de la zone de roulage au voisinage de l'aéronef affichée sur un dispositif d'affichage 14 tel qu'un écran relié au dispositif de traitement et placé à proximité du pilote, comme représenté en **figure 7a** **et** **7b****.** Une telle image peut être une vue 2D de dessus issue d'une cartographie, ou bien une vue 3D issue d'un dispositif de capture d'image embarqué et relié au dispositif de traitement. Le pilote peut ainsi vérifier la prise en compte de sa commande et la trajectoire à suivre que l'aéronef va emprunter en conséquence. Le pilote peut également adapter sa commande s'il s'aperçoit que la trajectoire que va emprunter l'aéronef ne correspond pas à celle qu'il voudrait lui faire emprunter.

Lorsque l'aéronef quitte une zone d'évolution libre pour rentrer dans une zone d'évolution linéaire, la trajectoire empruntée par l'aéronef sélectionnée en fonction du dernier rayon de courbure commandé par le pilote risque de faire rentrer l'aéronef dans la zone d'évolution linéaire en dehors d'une trajectoire prédéfinie de cette zone. Par exemple lorsque l'aéronef quitte une zone de parking pour s'engager sur une voie de « taxiing », il risque de ne pas être positionné correctement au centre de la voie de « taxiing ». La trajectoire de l'aéronef doit alors être adaptée par le dispositif de traitement 2 pour correspondre à une trajectoire prédéfinie de la zone d'évolution linéaire, par exemple pour replacer l'aéronef sur la ligne centrale de la voie de roulage.

Pour cela, comme représenté en **figure 8****,** lorsque l'aéronef est positionné dans une zone d'évolution libre de la zone de roulage, l'étape de sélection de ladite trajectoire à suivre E3 comprend :
- la sélection d'une trajectoire future parmi les trajectoires futures possibles déterminées en fonction de ladite commande reçue,
- la détection d'une intersection entre la trajectoire future sélectionnée et une frontière entre ladite zone d'évolution libre et une zone d'évolution linéaire de la zone de roulage,
- et la détermination de la trajectoire à suivre en corrigeant la trajectoire future sélectionnée de sorte que la trajectoire à suivre intersecte ladite frontière à une extrémité d'une trajectoire prédéfinie de ladite zone d'évolution linéaire.

La trajectoire à suivre par l'aéronef est ainsi adaptée afin que l'aéronef rentre dans la zone d'évolution linéaire en étant bien aligné sur une trajectoire prédéfinie de cette zone, sans que le pilote n'ait besoin de saisir une commande supplémentaire ou de reprendre la main en pilotage manuel.

La correction de la trajectoire future sélectionnée réalisée par le dispositif de traitement peut être réalisée en fonction d'un rayon de courbure minimal de la trajectoire de l'aéronef. En effet, dans certains cas la correction requise pourrait excéder ce rayon de courbure minimal. La trajectoire qui permettrait à l'aéronef de s'aligner sur une trajectoire prédéfinie ne pourra alors pas être suivie par l'aéronef. Afin d'éviter de requérir du module de guidage de guider l'aéronef le long d'une trajectoire impossible à suivre et de risquer de tromper le pilote en lui affichant une trajectoire à suivre par l'aéronef ne correspondant pas à celle que l'aéronef suivra en réalité, le module de sélection peut choisir dans ce cas par exemple de ne pas corriger la trajectoire future sélectionnée ou bien de sélectionner comme trajectoire à suivre la trajectoire future possible correspondant au rayon de courbure minimal de la trajectoire de l'aéronef.

Les commandes reçues par le dispositif de traitement peuvent également comprendre des commandes de freinage ou d'accélération destinées à modifier la vitesse de roulage de l'aéronef sur la piste ou bien directement des consignes de vitesse.

Lors de l'étape de guidage E4, le module de guidage 6 du dispositif de traitement de données 2 peut procéder au guidage de l'aéronef le long de la trajectoire à suivre sélectionnée en fonction de la localisation absolue de l'aéronef et d'une cartographie géoréférencée de la zone de roulage, ou bien en fonction du positionnement relatif de l'aéronef par rapport à des indicateurs au sol positionnés le long d'une trajectoire prédéfinie, ou bien encore en fonction des données de mesure de capteurs embarqués tels que des accéléromètres, capteurs inertiels ou odomètres. Pour réaliser ce guidage, le module de guidage peut actionner les systèmes d'accélération, de freinage ou de direction de l'aéronef 15 de façon à faire suivre à l'aéronef la trajectoire voulue. Le module de guidage peut générer les commandes d'actionnement de la roulette de nez, du système de freinage et du système de motricité de l'aéronef, tel que le moteur de l'aéronef ou un système EGTS (« Electric Green Taxiing System »).

Le dispositif de traitement 2 peut par ailleurs comprendre ou être relié à un module de détection de risque de collision 16. Un tel module peut comprendre un ou plusieurs capteurs destinés à détecter la présence d'obstacles à proximité ou au voisinage de l'appareil. Le procédé peut comprendre une étape de détection E6 au cours de laquelle le module de détection de risque de collision détermine si au moins un obstacle, mobile ou immobile, situé au voisinage de l'aéronef présente un risque de collision avec l'aéronef. Lorsqu'un risque de collision est détecté, le module de détection peut alors commander une immobilisation de l'aéronef pour éviter la collision. Le pilote est ainsi déchargé de la responsabilité de surveillance de l'environnement de l'aéronef pour éviter les collisions.

Le dispositif de traitement peut également commander une immobilisation de l'appareil se trouvant dans une zone d'évolution libre lorsque la trajectoire à suivre le long de laquelle il est guidé le conduit à atteindre une frontière entre cette zone et une zone non définie. Une telle zone non définie peut correspondre à une zone de l'aéroport sur laquelle aucun n'appareil n'est sensé rouler, comme un terre-plein, située au-delà des limites de la zone de roulage. Le dispositif de traitement peut ainsi par exemple empêcher l'aéronef de franchir les bords de la zone de roulage et de se retrouver dans l'herbe suite à une erreur du pilote.

Ainsi la charge du pilote est allégée pendant les phases de roulage. Celui-ci n'a en effet plus besoin que de définir les directions que l'aéronef doit suivre lors des bifurcations dans les zones de guidage linéaire et le rayon de courbure de la trajectoire de l'aéronef dans les zones de guidage libre. Le système permet également au pilote de modifier à tout instant la trajectoire de l'aéronef pour tenir compte des consignes du contrôle au sol.

## Revendications

1. Procédé de guidage d'un aéronef (1) sur une zone de roulage d'un aéroport mis en œuvre par un dispositif de traitement de données (2) d'un système de guidage, comprenant des étapes de :
- détection de zone (E0) dans laquelle le dispositif de traitement de données (2) détermine si l'aéronef (1) est positionné dans une zone d'évolution linéaire ou une zone d'évolution libre de la zone de roulage,
- détermination (E1) d'un ensemble de trajectoires futures possibles de l'aéronef en fonction de la topographie de la zone de roulage au voisinage de l'aéronef,
- réception (E2) d'au moins une commande relative à la trajectoire à suivre par l'aéronef,
- sélection (E3) d'une trajectoire à suivre à partir desdites trajectoires futures possibles déterminées et en fonction de ladite commande reçue,
- guidage (E4) de l'aéronef le long de la trajectoire à suivre sélectionnée
dans lequel lorsque l'aéronef (1) est dans une zone d'évolution libre de la zone de roulage dans laquelle il peut manœuvrer librement c'est-à-dire une zone d'évolution où aucune trajectoire n'est imposée, lesdites trajectoires futures possibles déterminées sont des trajectoires correspondant à un ensemble de rayons de courbure prédéterminés, ladite commande reçue est une commande relative à un rayon de courbure, et la trajectoire à suivre sélectionnée est la trajectoire future possible correspondant au rayon de courbure commandé et dans lequel, l'aéronef étant positionné dans une zone d'évolution libre de la zone de roulage, l'étape de sélection (E3) de ladite trajectoire à suivre comprend la sélection d'une trajectoire future parmi les trajectoires futures possibles déterminées en fonction de ladite commande reçue, la détection d'une intersection entre ladite trajectoire future sélectionnée et une frontière entre ladite zone d'évolution libre et une zone d'évolution linéaire de la zone de roulage, c'est-à-dire une zone dans laquelle l'aéronef doit suivre une trajectoire parmi un ensemble de trajectoires prédéfinies, et la détermination de la trajectoire à suivre en corrigeant la trajectoire future sélectionnée de sorte que la trajectoire à suivre intersecte ladite frontière à une extrémité d'une trajectoire prédéfinie de ladite zone d'évolution linéaire, ladite correction de la trajectoire future sélectionnée est réalisée en fonction d'un rayon de courbure minimal de la trajectoire de l'aéronef.

2. Procédé selon la revendication précédente dans lequel lorsque l'aéronef (1) est dans une zone d'évolution linéaire de la zone de roulage dans laquelle l'aéronef suit une trajectoire parmi un ensemble de trajectoires prédéfinies, lesdites trajectoires futures possibles sont déterminées parmi l'ensemble de trajectoires prédéfinies, ladite commande reçue est une commande d'une direction à suivre par l'aéronef à une intersection à venir et la trajectoire à suivre sélectionnée à ladite intersection est la trajectoire future possible orientée selon ladite direction à suivre.

3. Procédé selon la revendication 2 dans lequel lesdites trajectoires prédéfinies sont stockées sous forme d'une cartographie de la zone de roulage géoréférencée, et dans lequel lesdites trajectoires futures possibles sont déterminées en fonction d'une position absolue de l'aéronef et de ladite cartographie.

4. Procédé selon la revendication 2 dans lequel, ledit dispositif de traitement de données (2) étant susceptible d'être relié à au moins un dispositif de détection (13) d'indicateurs au sol, lesdites trajectoires prédéfinies sont définies par au moins un indicateur au sol (12), et lesdites trajectoires futures possibles sont déterminées à partir de données de mesure mesurées par ledit au moins un dispositif de détection (13).

5. Procédé selon l'une des revendications précédentes, dans lequel lors de l'étape de détection de zone (E0), le dispositif de traitement de données (2) détermine si l'aéronef (1) est positionné dans une zone d'évolution linéaire ou une zone d'évolution libre de la zone de roulage en fonction d'une position absolue de l'aéronef et d'une cartographie de la zone de roulage géoréférencée.

6. Procédé selon l'une des revendications précédentes 2 à 5 dans lequel ledit dispositif de traitement de données (2) est relié à au moins un dispositif de détection (13) de marqueurs au sol et dans lequel lors de l'étape de détection de zone (E0), le dispositif de traitement de données détermine si l'aéronef est positionné dans une zone d'évolution linéaire ou une zone d'évolution libre de la zone de roulage à partir de données de mesure mesurées par lesdits dispositifs de détection (13) de marqueurs au sol.

7. Procédé selon l'une des revendications précédentes comprenant en outre une étape d'affichage (E5) de la trajectoire à suivre sur une image de la topographie de la zone de roulage au voisinage de l'aéronef.

8. Procédé selon l'une des revendications précédentes dans lequel au moins une desdites commandes est une commande d'un pilote de l'aéronef.

9. Procédé selon l'une des revendications précédentes dans lequel au moins une desdites commandes est une commande manuelle ou vocale ou tactile.

10. Procédé selon l'une des revendications précédentes, dans lequel ladite étape de guidage (E3) comprend une immobilisation de l'aéronef lorsqu'un risque de collision de l'aéronef avec un obstacle mobile ou immobile situé au voisinage de l'aéronef est détecté.

11. Produit programme d'ordinateur comprenant des instructions de code pour l'exécution d'un procédé selon l'une quelconque des revendications précédentes lorsque ce programme est exécuté par un processeur.

12. Dispositif de traitement de données (2) d'un système de guidage d'un aéronef (1) sur une zone de roulage d'un aéroport, ledit dispositif de traitement étant **caractérisé en ce qu'**il comprend :
- un module de détermination (3) d'un ensemble de trajectoires futures possibles de l'aéronef en fonction de la topographie de la zone de roulage au voisinage de l'aéronef,
- un module de réception (4) d'au moins une commande relative à la trajectoire à suivre par l'aéronef,
- un module de sélection (5) d'une trajectoire à suivre à partir desdites trajectoires futures possibles déterminées et en fonction de ladite commande reçue,
- un module de guidage (6) de l'aéronef le long de la trajectoire à suivre sélectionnée,
le module de détermination (3) étant adapté pour déterminer si l'aéronef se trouve dans une zone d'évolution libre de la zone de roulage ou dans une zone d'évolution linéaire de la zone de roulage ; et
dans lequel lorsque l'aéronef (1) est dans une zone d'évolution libre de la zone de roulage dans laquelle il peut manœuvrer librement, c'est-à-dire une zone d'évolution où aucune trajectoire n'est imposée, lesdites trajectoires futures possibles déterminées sont des trajectoires correspondant à un ensemble de rayons de courbure prédéterminés, ladite commande reçue est une commande relative à un rayon de courbure, et la trajectoire à suivre sélectionnée est la trajectoire future possible correspondant au rayon de courbure commandé
et dans lequel, l'aéronef étant positionné dans une zone d'évolution libre de la zone de roulage, la sélection de ladite trajectoire à suivre comprend la sélection d'une trajectoire future parmi les trajectoires futures possibles déterminées en fonction de ladite commande reçue, la détection d'une intersection entre ladite trajectoire future sélectionnée et une frontière entre ladite zone d'évolution libre et une zone d'évolution linéaire de la zone de roulage, c'est-à-dire une zone dans laquelle l'aéronef doit suivre une trajectoire parmi un ensemble de trajectoires prédéfinies, et la détermination de la trajectoire à suivre en corrigeant la trajectoire future sélectionnée de sorte que la trajectoire à suivre intersecte ladite frontière à une extrémité d'une trajectoire prédéfinie de ladite zone d'évolution linéaire, la correction de la trajectoire future sélectionnée est réalisée en fonction d'un rayon de courbure minimal de la trajectoire de l'aéronef.

## Patentansprüche

1. Verfahren zum Lenken eines Luftfahrzeugs (1) auf einem Fahrbereich eines Flugplatzes, durchgeführt von einer Datenverarbeitungsvorrichtung (2) eines Führungssystems, umfassend Schritte des:
- Detektierens eines Bereichs (E0), in welchem die Datenverarbeitungsvorrichtung (2) bestimmt, ob das Luftfahrzeug (1) in einem linearen Fortbewegungsbereich oder in einem freien Fortbewegungsbereich des Fahrbereichs positioniert ist,
- Bestimmens (E1) einer Gesamtheit möglicher zukünftiger Wege des Luftfahrzeugs in Abhängigkeit von der Topographie des Fahrbereichs in der Nähe des Luftfahrzeugs,
- Empfangens (E2) mindestens eines Befehls, der sich auf den von dem Luftfahrzeug zu verfolgenden Weg bezieht,
- Auswählens (E3) eines zu verfolgenden Weges auf der Basis der bestimmten möglichen zukünftigen Wege und in Abhängigkeit von dem empfangenen Befehl,
- Lenkens (E4) des Luftfahrzeugs entlang des ausgewählten zu verfolgenden Weges,
wobei, wenn das Luftfahrzeug (1) in einem freien Fortbewegungsbereich des Fahrbereichs ist, in welchem es frei manövrieren kann, das heißt, einem Fortbewegungsbereich, in dem kein Weg vorgeschrieben ist, die bestimmten möglichen zukünftigen Wege Wege sind, die einer Gesamtheit vorbestimmter Krümmungsradien entsprechen, der empfangene Befehl ein Befehl ist, der sich auf einen Krümmungsradius bezieht und der ausgewählte zu verfolgende Weg der mögliche zukünftige Weg ist, der dem befohlenen Krümmungsradius entspricht und wobei, wobei das Luftfahrzeug in einem freien Fortbewegungsbereich des Fahrbereichs positioniert ist, der Schritt des Auswählens (E3) des zu verfolgenden Weges das Auswählen eines zukünftigen Weges aus den bestimmten zukünftigen Wegen in Abhängigkeit von dem empfangenen Befehl, das Detektieren eines Schnittpunktes zwischen dem ausgewählten zukünftigen Weg und einer Grenze zwischen dem freien Fortbewegungsbereich und einem linearen Fortbewegungsbereich des Fahrbereichs, das heißt, einem Bereich, in dem das Luftfahrzeug einen Weg aus einer Gesamtheit vorbestimmter Wege verfolgen muss, und des Bestimmens des zu verfolgenden Weges durch Korrigieren des ausgewählten zukünftigen Weges derart umfasst, dass der zu verfolgende Weg die Grenze an einem Ende eines vorbestimmten Weges des linearen Fortbewegungsbereichs schneidet, wobei die Korrektur des ausgewählten zukünftigen Weges in Abhängigkeit von einem minimalen Krümmungsradius des Weges des Luftfahrzeugs durchgeführt wird.

2. Verfahren nach vorangehendem Anspruch, wobei, wenn das Luftfahrzeug (1) in einem linearen Fortbewegungsbereich des Fahrbereichs ist, in welchem das Luftfahrzeug einen Weg aus einer Gesamtheit vorbestimmter Wege verfolgt, die möglichen zukünftigen Wege aus der Gesamtheit vorbestimmter Wege bestimmt werden, wobei der empfangene Befehl ein Befehl einer von dem Luftfahrzeug an einem kommenden Schnittpunkt zu verfolgenden Richtung ist und der an dem Schnittpunkt ausgewählte zu verfolgende Weg der mögliche zukünftige Weg, ausgerichtet gemäß der zu verfolgenden Richtung, ist.

3. Verfahren nach Anspruch 2, wobei die vorbestimmten Wege in Form einer Kartographie des georeferenzierten Fahrbereichs gespeichert werden und wobei die möglichen zukünftigen Wege in Abhängigkeit von einer absoluten Position des Luftfahrzeugs und der Kartographie bestimmt werden.

4. Verfahren nach Anspruch 2, wobei, wobei die Datenverarbeitungsvorrichtung (2) mit mindestens einer Detektionsvorrichtung (13) von Bodenindikatoren verbindbar ist, die vorbestimmten Wege von mindestens einem Bodenindikator (12) festgelegt werden und die möglichen zukünftigen Wege auf der Basis von Messdaten bestimmt werden, die von der mindestens einen Detektionsvorrichtung (13) gemessen werden.

5. Verfahren nach einem der vorangehenden Ansprüche, wobei beim Bereichsdetektionsschritt (E0) die Datenverarbeitungsvorrichtung (2) in Abhängigkeit von einer absoluten Position des Luftfahrzeugs und von einer Kartographie des georeferenzierten Fahrbereichs bestimmt, ob das Luftfahrzeug (1) in einem linearen Fortbewegungsbereich oder einem freien Fortbewegungsbereich des Fahrbereichs positioniert ist.

6. Verfahren nach einem der vorangehenden Ansprüche 2 bis 5, wobei die Datenverarbeitungsvorrichtung (2) mit mindestens einer Detektionsvorrichtung (13) von Bodenmarkern verbunden ist und wobei die Datenverarbeitungsvorrichtung beim Bereichsdetektionsschritt (E0), auf der Basis von Messdaten, die von den Detektionsmitteln (13) von Bodenmarkern gemessen werden, bestimmt, ob das Luftfahrzeug in einem linearen Fortbewegungsbereich oder einem freien Fortbewegungsbereich des Fahrbereichs positioniert ist.

7. Verfahren nach einem der vorangehenden Ansprüche, umfassend ferner einen Anzeigeschritt (E5) des zu verfolgenden Weges auf einem Bild der Topographie des Fahrbereichs in der Nähe des Luftfahrzeugs.

8. Verfahren nach einem der vorangehenden Ansprüche, wobei mindestens einer der Befehle ein Befehl eines Piloten des Luftfahrzeugs ist.

9. Verfahren nach einem der vorangehenden Ansprüche, wobei mindestens einer der Befehle ein manueller oder ein vokaler oder ein taktiler Befehl ist.

10. Verfahren nach einem der vorangehenden Ansprüche, wobei der Führungsschritt (E3) ein Anhalten des Luftfahrzeugs umfasst, wenn ein Kollisionsrisiko des Luftfahrzeugs mit einem beweglichen oder unbeweglichen Hindernis, das sich in der Nähe des Luftfahrzeugs befindet, ermittelt wird.

11. Rechnerprogrammprodukt, umfassend Codebefehle für die Ausführung eines Verfahrens nach einem der vorangehenden Ansprüche, wenn dieses Programm von einem Prozessor ausgeführt wird.

12. Datenverarbeitungsvorrichtung (2) eines Führungssystems eines Luftfahrzeugs (1) auf einem Fahrbereich eines Flugplatzes, wobei die Verarbeitungsvorrichtung **dadurch gekennzeichnet ist, dass** sie umfasst:
- ein Modul zum Bestimmen (3) einer Gesamtheit möglicher zukünftiger Wege des Luftfahrzeugs in Abhängigkeit von der Topographie des Fahrbereichs in der Nähe des Luftfahrzeugs,
- ein Modul zum Empfangen (4) mindestens eines Befehls, der sich auf den von dem Luftfahrzeug zu verfolgenden Weg bezieht,
- ein Modul zum Auswählen (5) eines zu verfolgenden Weges auf der Basis der bestimmten möglichen zukünftigen Wege und in Abhängigkeit von dem empfangenen Befehl,
- ein Modul zum Lenken (6) des Luftfahrzeugs entlang des ausgewählten zu verfolgenden Weges,
wobei das Modul zum Bestimmen (3) geeignet ist zu bestimmen, ob sich das Luftfahrzeug in einem freien Fortbewegungsbereich des Fahrbereichs oder in einem linearen Fortbewegungsbereich des Fahrbereichs befindet; und
wobei, wenn das Luftfahrzeug (1) in einem freien Fortbewegungsbereich des Fahrbereichs ist, in welchem es frei manövrieren kann, das heißt, einem Fortbewegungsbereich, in dem kein Weg vorgeschrieben ist, die bestimmten möglichen zukünftigen Wege Wege sind, die einer Gesamtheit vorbestimmter Krümmungsradien entsprechen, der empfangene Befehl ein Befehl ist, der sich auf einen Krümmungsradius bezieht und der ausgewählte zu verfolgende Weg der mögliche zukünftige Weg ist, der dem befohlenen Krümmungsradius entspricht
und wobei, wobei das Luftfahrzeug in einem freien Fortbewegungsbereich des Fahrbereichs positioniert ist, die Auswahl des zu verfolgenden Weges die Auswahl eines zukünftigen Weges aus den bestimmten zukünftigen Wegen in Abhängigkeit von dem empfangenen Befehl, die Detektion eines Schnittpunktes zwischen dem ausgewählten zukünftigen Weg und einer Grenze zwischen dem freien Fortbewegungsbereich und einem linearen Fortbewegungsbereich des Fahrbereichs, das heißt, einem Bereich, in dem das Luftfahrzeug einen Weg aus einer Gesamtheit vorbestimmter Wege verfolgen muss, und die Bestimmung des zu verfolgenden Weges durch Korrigieren des ausgewählten zukünftigen Weges derart umfasst, dass der zu verfolgende Weg die Grenze an einem Ende eines vorbestimmten Weges des linearen Fortbewegungsbereichs schneidet, wobei die Korrektur des ausgewählten zukünftigen Weges in Abhängigkeit von einem minimalen Krümmungsradius des Weges des Luftfahrzeugs durchgeführt wird.

## Claims

1. A method for guiding an aircraft (1) over an airport taxiing area, implemented by a data processing device (2) of a guidance system, comprising steps of:
- detecting an area (E0) in which the data processing device (2) determines whether the aircraft (1) is positioned in a linear movement area or a free movement area of the taxiing area,
- determining (E1) a set of possible future trajectories of the aircraft according to the topography of the taxiing area in the vicinity of the aircraft,
- receiving (E2) at least one command relating to the trajectory to be followed by the aircraft,
- selecting (E3) a trajectory to be followed from said determined possible future trajectories and according to said received command,
- guiding (E4) the aircraft along the selected trajectory to be followed
wherein when the aircraft (1) is in a free movement area of the taxiing area in which it can maneuver freely that is to say a movement area in which no trajectory is imposed, said determined possible future trajectories are trajectories corresponding to a set of predetermined radii of curvature, said received command is a command relating to a radius of curvature, and the selected trajectory to be followed is the possible future trajectory corresponding to the commanded radius of curvature and wherein, the aircraft being positioned in a free movement area of the taxiing area, the step of selecting (E3) said trajectory to be followed comprises the selection of a future trajectory from among the determined possible future trajectories according to said received command, the detection of an intersection between said selected future trajectory and a boundary between said free movement area and a linear movement area of the taxiing area, that is to say an area in which the aircraft must follow a trajectory out of a set of predefined trajectories, and the determination of the trajectory to be followed by correcting the selected future trajectory so that the trajectory to be followed intersects said boundary at one end of a predefined trajectory of said linear movement area, said correction of the selected future trajectory is made according to a minimum radius of curvature of the aircraft trajectory.

2. The method according to the preceding claim, wherein when the aircraft (1) is in a linear movement area of the taxiing area wherein the aircraft is following one trajectory out of a set of predefined trajectories, said possible future trajectories are determined from among the set of predefined trajectories, said received command is a command of a direction to be followed by the aircraft at a coming intersection and the selected trajectory to be followed at said intersection is the possible future trajectory oriented along said direction to be followed.

3. The method according to claim 2,wherein said predefined trajectories are stored in the form of a map of the georeferenced taxiing area, and wherein said possible future trajectories are determined according to an absolute position of the aircraft and said map.

4. The method according to claim 2 wherein, said data processing device (2) being able to be connected to at least one device (13) for detecting ground indicators, said predefined trajectories are defined by at least one ground indicator (12), and said possible future trajectories are determined from measurement data measured by said at least one detection device (13).

5. The method according to one of the preceding claims, wherein during the area detection step (E0), the data processing device (2) determines whether the aircraft (1) is positioned in a linear movement area or a free movement area of the taxiing area according to an absolute position of the aircraft and a map of the georeferenced taxiing area.

6. The method according to one of the preceding claims 2 to 5, wherein said data processing device (2) is connected to at least one ground marker detection device (13) and wherein during the area detection step (E0), the data processing device determines whether the aircraft is positioned in a linear movement area or a free movement area of the taxiing area from measurement data measured by said ground marker detection devices (13) .

7. The method according to one of the preceding claims, further comprising a step of displaying (E5) the trajectory to be followed on an image of the topography of the taxiing area in the vicinity of the aircraft.

8. The method according to one of the preceding claims, wherein at least one of said commands is a command from a pilot of the aircraft.

9. The method according to one of the preceding claims, wherein at least one of said commands is a manual or voice or touch command.

10. The method according to one of the preceding claims, wherein said guiding step (E3) comprises an immobilization of the aircraft when a risk of the aircraft colliding with a mobile or immobile obstacle located in the vicinity of the aircraft is detected.

11. A computer program product comprising code instructions for executing a method according to any one of the preceding claims when this program is executed by a processor.

12. A data processing device (2) of a system for guiding an aircraft (1) in a taxiing area of an airport, said processing device being **characterized in that** it comprises:
- a module (3) for determining a set of possible future trajectories of the aircraft according to the topography of the taxiing area in the vicinity of the aircraft,
- a module (4) for receiving at least one command relating to the trajectory to be followed by the aircraft,
- a module (5) for selecting a trajectory to be followed from said determined possible future trajectories and according to said received command,
- a module (6) for guiding the aircraft along the selected trajectory to be followed,
the determination module (3) being adapted to determine whether the aircraft is in a free movement area of the taxiing area or in a linear movement area of the taxiing area; and
wherein when the aircraft (1) is in a free movement area of the taxiing area in which it can maneuver freely, that is to say a movement area in which no trajectory is imposed, said determined possible future trajectories are trajectories corresponding to a set of predetermined radii of curvature, said received command is a command relating to a radius of curvature, and the selected trajectory to be followed is the possible future trajectory corresponding to the commanded radius of curvature,
and wherein, the aircraft being positioned in a free movement area of the taxiing area, the selection of said trajectory to be followed comprises the selection of a future trajectory from among the determined possible future trajectories according to said received command, the detection of an intersection between said selected future trajectory and a boundary between said free movement area and a linear movement area of the taxiing area, that is to say an area in which the aircraft must follow a trajectory out of a set of predefined trajectories, and the determination of the trajectory to be followed by correcting the selected future trajectory so that the trajectory to be followed intersects said boundary at one end of a predefined trajectory of said linear movement area, the correction of the selected future trajectory is made according to a minimum radius of curvature of the aircraft trajectory.
